# EUROPEAN PATENT APPLICATION

(11) **EP 3 855 813 A1**
(43) Date of publication of application: **28.07.2021**
(21) Application number: 19863414.9
(22) Date of filing: 01.08.2019
(51) Int. Cl.: H04W 56/00, H04W 76/10

(54) **TERMINAL DEVICE IN WIRELESS COMMUNICATION SYSTEM IN WHICH TERMINAL DEVICE PERFORMS COMMUNICATION IN STANDBY STATE, BASE STATION, COMMUNICATION METHOD AND PROGRAM**

(30) Priority: 20.09.2018 JP 2018175781
(71) Applicant: KDDI Corporation, Tokyo 163-8003 (JP)
(72) Inventor: OHSEKI, Takeo, Fujimino-shi, Saitama 356-8502 (JP); UMEHARA, Masahito, Fujimino-shi, Saitama 356-8502 (JP); KANNO, Issei, Fujimino-shi, Saitama 356-8502 (JP); SUEGARA, Yasuhiro, Fujimino-shi, Saitama 356-8502 (JP)
(74) Representative: Pitchford, James Edward
(86) International application number: PCT/JP2019/030334
(87) International publication number: WO 2020/059318

(57) **Abstract**

A terminal apparatus, which is operable in a plurality of states that include a first state where connection with a base station apparatus is established and a second state where connection with the base station apparatus is not established but the base station apparatus holds information regarding the terminal apparatus, receives, from the base station apparatus, information regarding whether or not to establish time synchronization when a signal is to be transmitted to the base station apparatus in the second state, determines, based on the information, as to whether or not to establish time synchronization when a signal is to be transmitted to the base station apparatus in the second state, and transmits a signal to the base station apparatus in the second state, with executing processing for establishing time synchronization with the base station apparatus if it is determined that time synchronization is to be established, and without executing the processing if it is determined that time synchronization is not to be established.

## Description

### TECHNICAL FIELD

The present invention relates to a terminal apparatus, a base station apparatus, a communication method, and a program, and in particular relates to a control technique for when the terminal apparatus in a standby state transmits a signal.

### BACKGROUND ART

In 3GPP, NR (New Radio) has been standardized as the fifth-generation wireless communication scheme (see Non-patent Document 1). An NR terminal apparatus may change to not only two states, namely RRC_CONNECTED and RRC_IDLE that an LTE (Long Term Evolution) terminal apparatus may enter, but also to an RRC INACTIVE state. Here, RRC CONNECTED refers to a state of being connected to and being in communication with a base station apparatus, and RRC_INACTIVE and RRC_IDLE refer to standby states. Note that the RRC INACTIVE state is a state where context information regarding a terminal apparatus for the terminal apparatus to communicate with a core network is held by a base station apparatus to which the terminal apparatus was connected until the terminal apparatus changed to the RRC_INACTIVE state (a base station apparatus to which the terminal apparatus was connected for the last time), and the RRC_lDLE state is a state where such information is not held by the base station apparatus.

Non-patent Document 2 describes that consideration is given to a terminal apparatus in the RRC_INACTIVE state to transmit data, and that an MA (Multiple Access) signature is allocated to the terminal apparatus for such data transmission. The MA signature may be information for specifying a data transmission pattern inherent to the terminal apparatus, such as a time/frequency wireless resource block, MCS (Modulation and Coding Scheme), DMRS (Demodulate Reference Signal) for specifying the terminal apparatus, and an interleaving pattern. The terminal apparatus transmits data using the MA signature, and the base station apparatus can separate and identify the data transmitted from the terminal apparatus using this MA signature.

### CITATION LIST

### PATENT LITERATURE

NPL 1: 3GPP TS 38.300, V15.2.0, June 2018
NPL 2: 3GPP written contributions, RP-171043

### SUMMARY OF INVENTION

### TECHNICAL PROBLEM

As described above, the terminal apparatus in the RRC INACTIVE state can transmit data without changing to the RRC _CONNECTED state, by using the MA signature. At this time, the terminal apparatus can establish time synchronization with a base station apparatus to which the data is to be transmitted, and then transmit the data, but the terminal apparatus can also transmit data without establishing time synchronization.

### SOLUTION TO PROBLEM

The present invention provides a technique that makes it possible to perform flexible control as to whether or not to establish time synchronization when a terminal apparatus in a standby state transmits a data signal.

A terminal apparatus according to one mode of the present invention is a terminal apparatus that is operable in a plurality of states that include a first state where connection with a base station apparatus is established and a second state where connection with the base station apparatus is not established but the base station apparatus holds information regarding the terminal apparatus, wherein the terminal apparatus receives, from the base station apparatus, information regarding whether or not to establish time synchronization when a signal is to be transmitted to the base station apparatus in the second state, determines, based on the information, whether or not to establish time synchronization when a signal is to be transmitted to the base station apparatus in the second state, and transmits a signal to the base station in the second mode with executing processing for establishing time synchronization with the base station apparatus if it is determined that time synchronization is to be established, and without executing the processing if it is determined that time synchronization is not to be established.

A base station apparatus according to one mode of the present invention transmits, to a terminal apparatus that is operable in a plurality of states that include a first state where connection with the base station apparatus is established and a second state where connection with the base station apparatus is not established but the base station apparatus holds information regarding the terminal apparatus, information regarding whether or not to establish time synchronization when a signal is transmitted to the base station apparatus in the second state.

### ADVANTAGEOUS EFFECTS OF INVENTION

According to the present invention, it is possible to perform flexible control as to whether or not to establish time synchronization when a terminal apparatus in a standby state transmits a data signal.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing a configuration example of a wireless communication system.
FIG. 2 is a diagram showing an exemplary hardware configuration of an apparatus.
FIG. 3 is a diagram showing an exemplary functional configuration of a terminal apparatus.
FIG. 4 is a diagram showing an exemplary functional configuration of a base station apparatus.
FIG. 5 is a diagram showing an example of the flow of processing that is executed in the wireless communication system.
FIG. 6 is a diagram showing an example of the flow of processing that is executed by a terminal apparatus.

### DESCRIPTION OF EMBODIMENTS

Hereinafter, embodiments will be described in detail with reference to the attached drawings. Note that the following embodiment does not limit the scope of the claimed invention, and all of the combinations of characteristics described in the embodiment are not necessarily essential to the invention. Two or more out of a plurality of characteristics described in the embodiment may be suitably combined. In addition, the same reference numerals are given to the same or similar configurations, and redundant description thereof is omitted.

### Configuration of Wireless Communication System

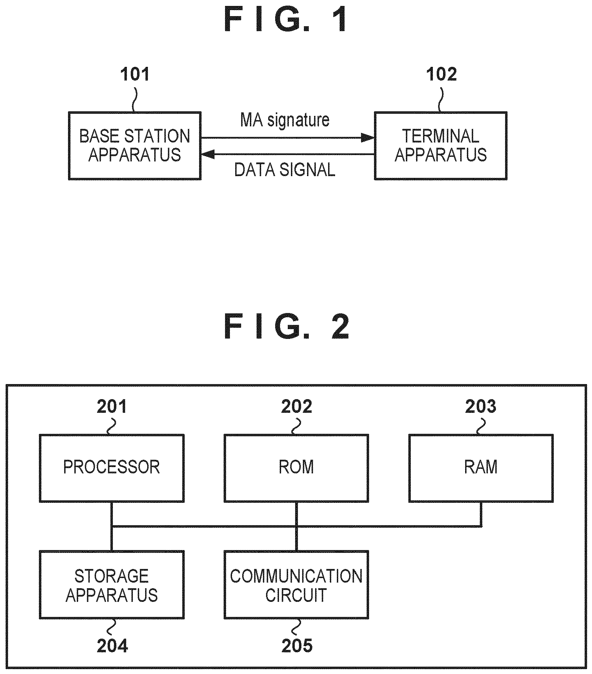

FIG. 1 shows a configuration example of a wireless communication system according to an embodiment of the present invention. This wireless communication system is configured by including a base station apparatus 101 and a terminal apparatus 102, for example. Note that FIG. 1 shows one base station apparatus and one terminal apparatus in order to simplify the description, but there may be a large number of base station apparatuses and a large number of terminal apparatuses, as in a general cellular communication system. Note that an example will be described below in which NR, which complies with the fifth-generation wireless communication scheme, is used, but there is no limitation thereto. The following discussion can apply to, for example, fifth-generation or later cellular communication systems and any other systems that include a terminal apparatus (communication apparatus) that can transmit/receive certain data in a standby state such as an RRC INACTIVE state stipulated for NR Accordingly, the base station apparatus 101 may be any base station apparatus that can communicate with not only a terminal apparatus with which connection has been established, but also a terminal apparatus with which connection has not been established but that can perform certain data communication. In addition, the terminal apparatus 102 is configured to be operable in a first state where connection with the base station apparatus is established and a second state where connection with the base station apparatus is not established but it is possible to perform a certain amount of data communication with the base station apparatus.

The base station apparatus 101 is a base station apparatus (gNB) that is operable in accordance with NR, for example. The base station apparatus 101 forms one or more cells/beams, and provides a communication service to the terminal apparatus 102 in the range of the cells/beams. The terminal apparatus 102 is a terminal apparatus that is operable in accordance with NR, and can communicate with NR base station apparatus.

The terminal apparatus 102 can obtain an MA signature from the base station apparatus 101 and use the MA signature for performing communication with the base station apparatus 101, for example. Note that the MA signature is predetermined information that enables data communication at least in the RRC_INACTIVE state, and other information may also be used instead of or in addition to the MA signature. Note that the MA signature can also be used in the RRC _CONNECTED state, for example. After receiving the MA signature, the terminal apparatus 102 may change to the RRC INACTIVE state in accordance with an RRCRelease message accompanied by suspendConfig being received from the base station apparatus 101, for example.

The terminal apparatus 102 can transmit a data signal to the base station apparatus 101 while maintaining the RRC_INACTIVE state. At this time, for example, the terminal apparatus 102 can transmit physical random access channel (PRACH) to the base station apparatus 101 and receive a timing advance (TA) command from the base station apparatus 101 so as to establish time synchronization with the base station apparatus 101, and then transmit an uplink signal. Specifically, the terminal apparatus 102 calculates the relative time difference between the leading time of a downlink wireless frame and the leading time of an uplink wireless frame, using the TA command received from the base station apparatus 101, and determines a timing for transmitting an uplink data signal based on the calculation result. As a result of the terminal apparatus 102 establishing time synchronization with the base station apparatus 101 and transmitting a data signal in this manner, the base station apparatus 101 can extract the data signal with a relatively low processing load. In this case, it should be noted that the terminal apparatus 102 can transmit the data signal while maintaining the RRC INACTIVE state, without changing to the RRC_CONNECTED state. In addition, the terminal apparatus 102 can transmit a data signal to the base station apparatus 101 without establishing time synchronization with the base station apparatus 101. Accordingly, the above-described processing for establishing time synchronization between the terminal apparatus 102 and the base station apparatus 101, the processing being related to the TA command, is not necessary, and thus it is possible to suppress a delay in transmission of the data signal although the processing load of the base station apparatus 101 is relatively large. Therefore, for example, a terminal apparatus 102 for which a low delay is requested (asynchronously) transmits a data signal without establishing time synchronization, so as to suppress the delay amount, and it is envisioned that another terminal apparatus 102 performs operations of establishing time synchronization and transmitting a data signal, so as to suppress the processing load, for example.

According to this embodiment, in order to perform such flexible operations, the base station apparatus 101 may notify the terminal apparatus 102 of information regarding whether the terminal apparatus 102 is to establish time synchronization and then transmit a data signal, or asynchronously transmit a data signal.

The information that is notified can be instruction information indicating that time synchronization is to be established or is not to be established, for example. In this case, in accordance with this instruction information, the terminal apparatus 102 establishes time synchronization and then transmits a data signal if instructed to establish time synchronization, and the terminal apparatus 102 asynchronously transmits a data signal if instructed to not establish time synchronization. For example, the base station apparatus 101 can instruct a terminal apparatus 102 that performs communication for a service for which a low delay is requested, or the like, to asynchronously transmit a data signal, and instruct another terminal apparatus 102 to establish time synchronization and then transmit a data signal. Accordingly, the base station apparatus 101 can flexibly perform setting on whether or not to establish time synchronization, for each terminal apparatus 102. Note that the instruction information may be notified, for example, only when an instruction to not establish time synchronization is given. Specifically, a configuration is adopted in which, if the instruction information is not notified, the terminal apparatus 102 establishes time synchronization and then transmits a data signal, and, only if the instruction information is notified, the terminal apparatus 102 asynchronously transmits a data signal. Accordingly, notification that time synchronization is to be established is performed implicitly by the instruction information not being transmitted. Accordingly, the amount of instruction information that is transmitted decreases, and thus it is possible to reduce the signaling overhead.

Note that the terminal apparatus 102 in the RRC_CONNECTED state is in a state of receiving the TA command from the base station apparatus 101, and thus does not asynchronously transmit a signal. In addition, the terminal apparatus 102 in the RRC_IDLE state changes to the RRC_CONNECTED state when transmitting a data signal, and thus does not asynchronously transmit a signal, either. Accordingly, both synchronized communication and asynchronous communication here are related to communication that is performed by the terminal apparatus 102 in the RRC_INACTIVE state (standby state).

Note that information that is notified to the terminal apparatus 102 by the base station apparatus 101 may be condition information indicating a condition under which the terminal apparatus 102 is to establish time synchronization, and, in this case, a configuration can be adopted in which, when the condition under which time synchronization is to be established is satisfied, the terminal apparatus 102 establishes time synchronization and then transmits a data signal, and, while the condition is not satisfied, the terminal apparatus 102 asynchronously transmits a data signal. Accordingly, the condition information in this case is information indicating a condition for determining whether or not the terminal apparatus 102 is to establish time synchronization and then transmit a data signal. This condition may be that, for example, data that is to be transmitted arise in communication for which a low delay is requested such as real-time communication.

Note that, even when asynchronous communication is performed, it is requested that variation in the timing of the terminal apparatus 102 transmitting a data signal be within a certain time range, using, as a reference, a state where time synchronization is established. This is because, if the variation is significantly large, it is difficult for the base station apparatus 101 to detect the signal. Therefore, an event for which it is envisioned that the timing of the terminal apparatus 102 transmitting a data signal is out of the certain time range may be set as the above-described condition.

For example, it is indicated that, as the condition information, time synchronization is to be established when the change amount of received power of a predetermined signal such as an SS (Synchronization Signal) or an informing signal (Physical Broadcast Channel, PBCH) from the base station apparatus 101 exceeds a predetermined value. Note that this change amount may be a change amount of an average power value per unit time, or may be a change amount of an instantaneous power value. When the received power value of the signal from the base station apparatus 101 has significantly changed, it is envisioned that the distance (of the transmission path, for example) between the base station apparatus 101 and the terminal apparatus 102 has significantly changed, and thus this condition can be provided. When the change amount of the received power of the predetermined signal has significantly changed, it is envisioned that the time until the signal transmitted from the terminal apparatus 102 reaches the base station apparatus 101 will significantly change, and thus, when this condition is satisfied, the terminal apparatus 102 may establish time synchronization and then asynchronously resume communication.

In addition, for example, it can be indicated, as the condition information, that time synchronization is to be established when a time length elapsed from when the terminal apparatus 102 established time synchronization and transmitted a data signal exceeds a predetermined length. This is because, when the terminal apparatus 102 establishes time synchronization, time synchronization is established accurately at this point, but it is envisioned that the synchronization is lost gradually with the lapse of time. Note that it suffices for time synchronization to be reestablished based on determination as to whether or not synchronization is lost, when data that is to be transmitted arises and the data is transmitted, and it is not necessary to reestablish time synchronization when the time length from when time synchronization was established and data transmission was performed reaches a predetermined length.

In addition, it may be indicated that, as condition information, time synchronization is to be established, in accordance with the terminal apparatus 102 having been moved over cells. Also in this case, there are cases where, due to the terminal apparatus 102 having been moved over cells, the propagation distance of a signal that is transmitted from the terminal apparatus 102 and reaches the base station apparatus 101 changes a larger amount than envisioned, and thus, if this condition is satisfied, the terminal apparatus 102 may establish time synchronization and then resume asynchronous communication.

Note that a plurality of conditions may be set, or only one condition may be set. For example, at least one of the above-described condition related to the change amount of the received power of the predetermined signal from the base station apparatus 101, condition related to a time elapsed from when time synchronization was established and a data signal was transmitted, and condition related to whether or not the terminal apparatus 102 has been moved over cells can be notified as condition information to the terminal apparatus 102. Note that at least some of these pieces of condition information may be set for the terminal apparatus 102 in advance, and, in this case, the terminal apparatus 102 may independently determine whether or not to establish time synchronization irrespective of notification from the base station apparatus 101.

Note that the base station apparatus 101 can separate/extract a signal component from a received signal that includes the signal component and is asynchronously transmitted from the terminal apparatus 102, using the MA signature set for the terminal apparatus 102. Therefore, a configuration may also be adopted in which the above-described information is not notified to a terminal apparatus 102 for which no MA signature is set, based on the assumption that the terminal apparatus 102 is to establish time synchronization, and the above-described information is notified only to a terminal apparatus 102 for which an MA signature has been set. Accordingly, it is not necessary to notify a terminal apparatus 102 for which no MA signature is set, that time synchronization is to be established at the time of signal transmission, and thus it is possible to prevent unnecessary signaling from being performed. In addition, this information may also be included in a message for setting an MA signature and transmitted to the terminal apparatus 102. Accordingly, it is possible to efficiently notify the terminal apparatus 102 for which an MA signature is set, that time synchronization is to be or not to be established. In addition, the base station apparatus 101 may also notify the terminal apparatus 102 of the above-described information, for example, using a message (the RRCRelease message that includes suspendConfig) for changing the state of the terminal apparatus 102 to the RRC_INACTIVE state. Accordingly, unnecessary notification of the above-described information is not performed to the terminal apparatus 102 that does not change to the RRC INACTIVE state, and, in addition, it is possible to perform setting on whether or not to establish time synchronization, individually for each terminal apparatus 102 that changes to the RRC INACTIVE state. In addition, the base station apparatus 101 may also perform notification of the above-described information, for example, using any message that enables information to be transmitted to the terminal apparatus 102 in the RRC INACTIVE state, or using any message that is transmitted to the terminal apparatus 102 while the state is the RRC _CONNECTED state. Accordingly, notification of the above-described information may also be performed using a message for performing notification of an MA signature or a message for changing the state to the RRC INACTIVE state, or using any other message (signal).

### Apparatus Configuration

Next, an exemplary hardware configuration of the base station apparatus 101 or the terminal apparatus 102 that execute the above-described processing will be described with reference to FIG. 2. These apparatuses are each constituted by a processor 201, a ROM 202, a RAM 203, a storage apparatus 204, and a communication circuit 205, for example. The processor 201 is a computer configured by including one or more processing circuits such as a general-purpose CPU (central computation apparatus) and an ASIC (Application-Specific Integrated Circuit), and executes overall processing of each apparatus or the above-described processing as a result of reading out a program stored in the ROM 202 or the storage apparatus 204 and executing the program. The ROM 202 is a read-only memory that stores information such as programs related to processing that is executed by the apparatuses and various parameters. The RAM 203 is a random access memory that functions as a work space when the processor 201 executes a program, and stores temporary information. The storage apparatus 204 is constituted by a removable external storage apparatus, for example. The communication circuit 205 is constituted by a circuit for wired communication or wireless communication, for example. The base station apparatus 101 is configured by including an antenna and a baseband circuit, RF circuit, and the like for NR, as the communication circuit 205 for performing communication with the terminal apparatus 102. In addition, the communication circuit 205 of the base station apparatus 101 may also include, for example, a circuit for performing (wired or wireless) communication with another base station apparatus or network node. In addition, the communication circuit 205 of the terminal apparatus 102 is configured by including an antenna and a baseband circuit, RF circuit, and the like for NR In addition, the terminal apparatus 102 may include the communication circuit 205 for performing wireless LAN communication or communication that complies with another communication standard. Note that, FIG. 2 illustrates one communication circuit 205, but each apparatus may include a plurality of communication circuits.

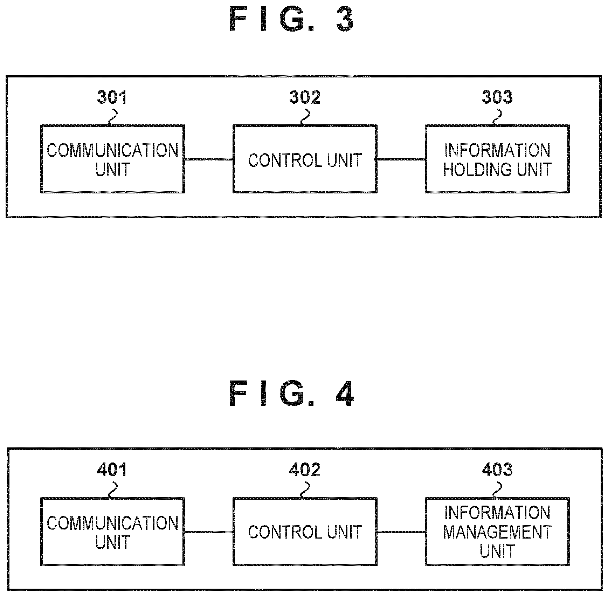

FIG. 3 shows a schematic example of the functional configuration of the terminal apparatus 102. The terminal apparatus 102 includes a communication unit 301, a control unit 302, and an information holding unit 303, for example. The communication unit 301 performs communication with a base station apparatus. Note that the communication unit 301 is operable in one of three states, namely RRC CONNECTED, RRC INACTIVE, and RRC_IDLE under control of the base station apparatus, and is configured to be able to transmit/receive data to/from the base station apparatus that is connected thereto in the RRC _CONNECTED state. In addition, also in the RRC INACTIVE state, the communication unit 301 can transmit a small amount of data to the base station apparatus, using the MA signature held in the information holding unit 303 to be described later. The control unit 302 can control the communication unit 301 so as to execute various types of processing of the terminal apparatus 102 such as those described above. Specifically, the control unit 302 controls the communication unit 301, for example, in accordance with instruction information received from the base station apparatus 101, so as to establish time synchronization with the base station apparatus 101 and transmit a data signal to the base station apparatus 101 if an instruction to establish time synchronization is received, and so as to asynchronously transmit a data signal to the base station apparatus 101 while maintaining the RRC INACTIVE state if an instruction to not establish time synchronization is received. The control unit 302 can also determine whether or not to establish time synchronization and then transmit a signal, for example, in accordance with information regarding a condition notified from the base station apparatus 101 and held in the information holding unit 303, and control the communication unit 301, in accordance with the determination, so as to establish time synchronization and then transmit a data signal to the base station apparatus 101 or asynchronously transmit a data signal while maintaining the RRC INACTIVE state. The information holding unit 303 holds the MA signature set by the base station apparatus in the RRC _CONNECTED state, for example. In addition, the information holding unit 303 can hold information regarding the condition that is used for determining whether or not to establish time synchronization, the information having been notified from the base station apparatus 101.

FIG. 4 shows a schematic example of the functional configuration of the base station apparatus 101. The base station apparatus 101 includes a communication unit 401, a control unit 402, and an information management unit 403, for example. The communication unit 401 communicates with the terminal apparatus 102 and another base station apparatus. Note that a communication unit for performing wireless communication with the terminal apparatus 102 and a communication unit for performing communication with another base station apparatus may be prepared separately, but, for example, in a case where communication with another base station apparatus is executed in accordance with the NR standard, only one communication unit 401 may be prepared.

The control unit 402 may control the communication unit 401 so as to execute various types of processing of the base station apparatus such as those described above. For example, the control unit 402 controls the information management unit 403 so as to set an MA signature for the terminal apparatus 102 and hold the MA signature. In addition, a configuration may also be adopted in which the control unit 402 determines, for each terminal apparatus 102, whether or not to establish time synchronization, based on a condition for determining whether or not to establish time synchronization for information indicating a service for which terminal apparatuses 102 managed by the information management unit 403 are performing communication, for example, and controls the communication unit 401 so as to transmit an instruction that is based on the determination. In addition, the control unit 402 may control the communication unit 401, for example, so as to notify the terminal apparatus 102 of the above-described condition related to the change amount of the wireless quality such as received power of a predetermined signal from the base station apparatus 101 or condition related to the lapsed time from when time synchronization was established and data was transmitted. Note that, when notification of a condition is performed, a common condition may be notified to a plurality of terminal apparatuses 102, or a condition different for each terminal apparatus 102 may be notified, for example, based on classification such as the category of the terminal apparatus 102 (stipulated by 3GPP, for example). The information management unit 403 may manage, for example, the MA signature set for each terminal apparatus 102 and a condition for determining whether or not to establish time synchronization for information indicating a service for which the terminal apparatus 102 is performing communication, and the like. The information management unit 403 can also hold information such as a measurement value that is used for this determination.

### Flow of Processing

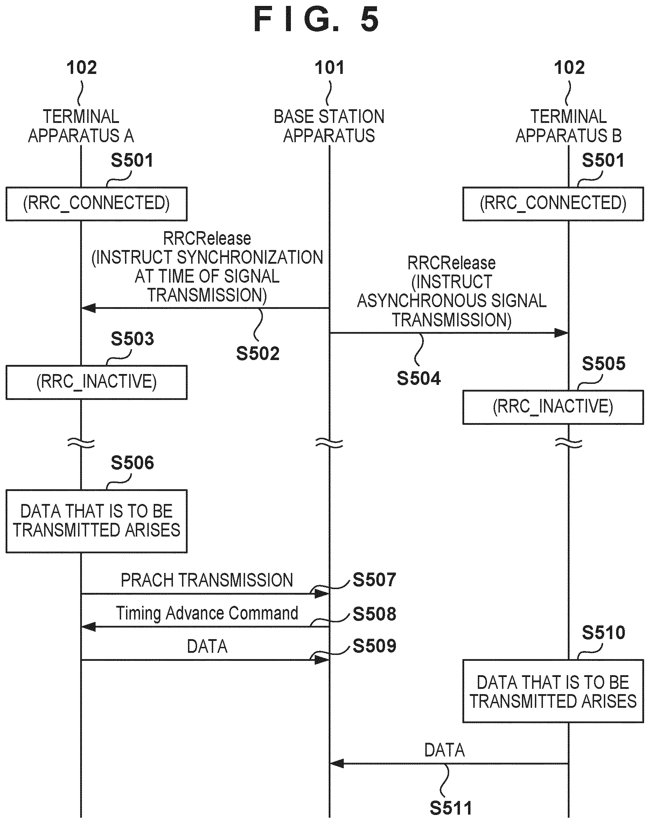

FIG. 5 shows an example of the flow of processing that is executed by the wireless communication system according to this embodiment. FIG. 5 shows an example in which the base station apparatus 101 transmits, respectively to two terminal apparatuses 102, an instruction to establish time synchronization and then transmit a signal and an instruction to asynchronously transmit a signal. Note that the two terminal apparatuses 102 (a terminal apparatus A and a terminal apparatus B) are in a state where connection is established with the base station apparatus 101 (the RRC_CONNECTED state)(step S501). At this time, for example, MA signatures are separately set for these terminal apparatuses 102 in the RRC_CONNECTED state (not illustrated). The base station apparatus 101 transmits the RRCRelease message that includes suspendConfig for changing the terminal apparatus A and the terminal apparatus B from this state to the RRC_INACTIVE state. At this time, the base station apparatus 101 transmits, to the terminal apparatus A, the RRCRelease message that includes instruction information instructing that time synchronization is to be established and then uplink data is to be transmitted (step S502). Accordingly, when transmitting uplink data, the terminal apparatus A performs settings for establishing time synchronization, and then changes to the RRC INACTIVE state (step S503). On the other hand, the base station apparatus 101 transmits, to the terminal apparatus B, the RRCRelease message that includes instruction information instructing that uplink data is to be asynchronously transmitted without establishing time synchronization (step S504). Accordingly, the terminal apparatus B performs settings for asynchronously transmitting uplink data, and then changes to the RRC INACTIVE state (step S505). Note that, in the example in FIG. 5, instruction information instructing to or not to establish time synchronization is notified in the RRCRelease message, but the base station apparatus 101 may also perform notification of this instruction information, for example, in a message for setting an MA signature (not illustrated).

Thereafter, if data that is to be transmitted arises (step S506), the terminal apparatus A transmits PRACH to the base station apparatus 101 (step S507), receives the TA command (step S508), and establishes time synchronization with the base station apparatus 101. The terminal apparatus A then transmits a data signal at a timing determined as a result of time synchronization being established in steps S507 and S508 (step S509). On the other hand, when data that is to be transmitted arises (step S510), the terminal apparatus B asynchronously transmits a data signal without transmitting PRACH and receiving the TA command (step S511). Note that "asynchronous" here refers to accurate time synchronization having not been established, and the terminal apparatus B can transmit a data signal to the base station apparatus 101 within a predetermined time range based on wireless resources specified based on the MA signature, for example. Accordingly, the base station apparatus 101 does not need to perform processing for detecting a signal outside of the predetermined time range that is determined based on the MA signature, for example.

In this manner, the base station apparatus 101 can flexibly perform settings for synchronization/asynchronization for each terminal apparatus 102, for example, by performing an instruction to asynchronously transmit a signal, when a delay time allowable for a service that is executed by the terminal apparatus 102 is shorter than or equal to a predetermined value, and by performing an instruction to establish time synchronization and then transmit a signal, when the delay time exceeds the predetermined value.

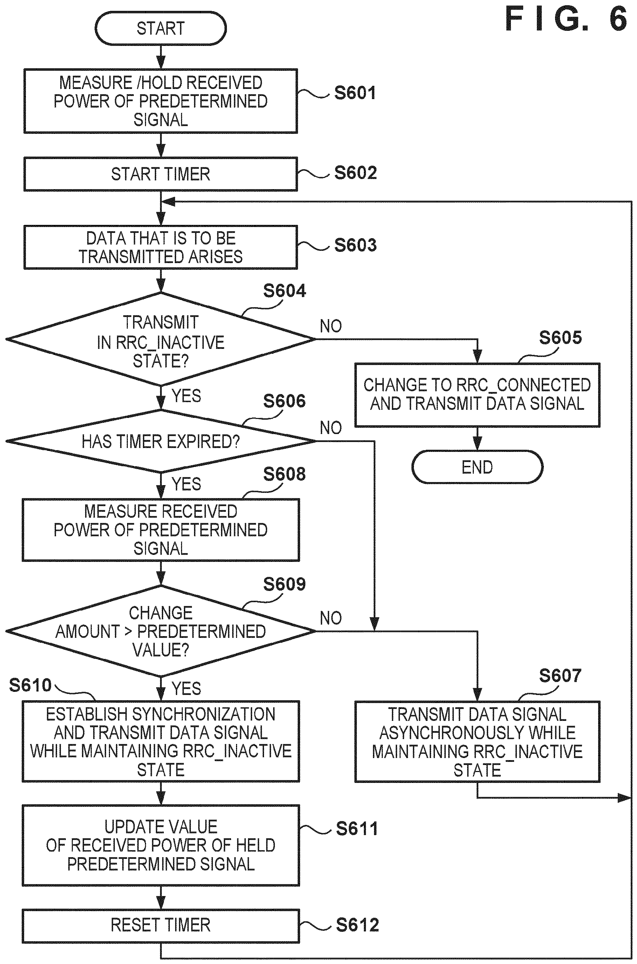

Note that the base station apparatus 101 may also perform notification of condition information such as that described above instead of an instruction signal. In this case, the terminal apparatus 102 can determine whether or not to establish time synchronization at the time of signal transmission, based on whether or not the situation of the terminal apparatus 102 satisfies the notified condition. As described above, the condition can be, for example, the condition related to the change amount of the wireless quality of the received power or the like of a predetermined signal transmitted from the base station apparatus 101, or the condition related to a lapsed time from when time synchronization was established and a signal was transmitted. FIG. 6 shows an example of the flow of processing when these conditions are used. Note that only one of these conditions, for example, the condition related to a lapsed time may also be used, or another condition may also be used alternatively or additionally. For example, a configuration may also be adopted in which the terminal apparatus 102 extracts the identifier of a cell (e.g., Physical Cell ID or PCI) from a received synchronization signal or informing signal, and when the identifier changes, the terminal apparatus 102 establishes time synchronization and transmit a signal.

Note that FIG. 6 shows an example in which, when the lapsed time has reached the predetermined time and the change amount of the received power of the predetermined signal exceeds the predetermined value, the terminal apparatus 102 makes a determination to establish time synchronization, but these may also be dealt with in parallel. Specifically, when the lapsed time reaches the predetermined time, the terminal apparatus 102 may make a determination to establish time synchronization even when the change amount of the received power of the predetermined signal does not exceed the predetermined value, and, when the change amount of the received power of the predetermined signal exceeds the predetermined value, the terminal apparatus 102 may make a determination to establish time synchronization even when the lapsed time has not reached the predetermined time. In this manner, when a plurality of conditions are used, unless two or more of the conditions are not satisfied at the same time, a determination may also be made to asynchronously transmit a signal, or, when only one of these condition is satisfied, a determination may be made to establish time synchronization and then transmit a signal.

In FIG. 6, the terminal apparatus 102 obtains, as condition information, information regarding the expiration value of a timer and a predetermined value for the change amount of the received power of the predetermined signal (for example, synchronization signal/informing signal), from the base station apparatus 101, and stores the information in advance. The terminal apparatus 102 then measures and holds the value of the received power of the predetermined signal from the base station apparatus 101 at a time point when the terminal apparatus 102 changes to the RRC INACTIVE state (or during a predetermined period before and after the time point) (step S601), for example. The terminal apparatus 102 starts the timer in this state (step S602). Thereafter, when the terminal apparatus 102 detects that data that is to be transmitted has arisen (step S603), the terminal apparatus 102 determines whether or not the data is to be transmitted in the RRC_INACTIVE state (step S604). If it is determined that the data is not to be transmitted in the RRC INACTIVE state (in other words, the data is to be transmitted after the state has changed to the RRC_CONNECTED state) (NO in step S604), the terminal apparatus 102 changes to the RRC _CONNECTED state, transmits a data signal that includes the data (step S605), and ends the processing in FIG. 6. In the RRC _CONNECTED state, the terminal apparatus 102 establishes time synchronization and then transmits the data. Note that, if the terminal apparatus 102 changes to the RRC_INACTIVE state again after transmitting the data signal in step S605, the terminal apparatus 102 may resume the processing in FIG. 6.

On the other hand, if it is determined that the data is to be transmitted in the RRC_INACTIVE state (YES in step S604), the terminal apparatus 102 determines whether or not the timer started in step S602 has reached the expiration value notified from the base station apparatus 101 (step S606). If the timer has not expired (NO in step S606), the terminal apparatus 102, which is still in the RRC INACTIVE state, transmits a data signal that includes the data arose in step S603 without establishing time synchronization (step S607). On the other hand, if the timer has expired (YES in step S606), the terminal apparatus 102 measures the received power of the predetermined signal from the base station apparatus 101 (step S608). The terminal apparatus 102 then specifies, as a change amount, the value of the difference between the measurement value and the value held in step S601, and determines whether or not the specified change amount exceeds the predetermined value for the change amount notified from the base station apparatus 101 (step S609). If the change amount of the received power does not exceed the predetermined value (NO in step S609), the terminal apparatus 102 transmits a data signal that includes the data that arose in step S603 while maintaining the RRC_INACTIVE state (step S607). Note that, after this, the timer is in an expired state, and thus the terminal apparatus 102 may determine whether or not the change amount of the received power exceeds the predetermined value, every time data that is to be transmitted arises. Note that there is no limitation thereto, and, if it is determined in step S609 that the change amount of the received power does not exceed the predetermined value, the terminal apparatus 102 may reset the timer. If the change amount of the received power exceeds the predetermined value (YES in step S609), the terminal apparatus 102 establishes time synchronization with the base station apparatus 101, and then transmits a data signal while maintaining the RRC_INACTIVE state (step S610). Note that the terminal apparatus 102 may establish time synchronization and then transmit a data signal, only in accordance with the timer having expired, or only in accordance with the change amount of the received power exceeding the predetermined value. The terminal apparatus 102 updates the value of the received power of the predetermined signal obtained in step S601 (or updated in the previous step S611), to the value measured in step S608 in accordance with time synchronization having been established (step S611), and resets the timer (step S612). The procedure is then returned to step S603.

Note that the above example is illustrated in which, after it is detected that the timer has expired, a determination is performed as to whether or not the change amount of the received power of the predetermined signal exceeds the predetermined value, but such a determination order may be reversed. Accordingly, a configuration may also be adopted in which, after it is determined that the change amount of the received power of the predetermined signal has exceeded the predetermined value, the timer value is referenced. In this manner, the processing in FIG. 6 is only exemplary, and the processing order may be changed, or the processing may be partially omitted or processing (not illustrated) may be added.

In addition, as described above, the terminal apparatus 102 can make a determination to establish time synchronization, based only on the value of the timer (irrespective of the change amount of the received power), but, even when such a determination is made, the terminal apparatus 102 can update the measurement value of the received power that is held, to the measurement value of the received power at a timepoint when time synchronization is established and a data signal is transmitted. Similarly, if it is determined that time synchronization is to be established based only on the change amount of the received power, when the timer value is used as a condition, the terminal apparatus 102 may reset the timer at a timepoint when time synchronization is established and a data signal is transmitted. In addition, for example, when the terminal apparatus 102 established time synchronization and transmitted a data signal in accordance with being moved to a cell different from a cell that has changed to the RRC_INACTIVE state, the terminal apparatus 102 can reset the timer and update the measurement value of the received power that is held. Note that, when a determination is made as to whether or not time synchronization can be established based on movement over cells, the terminal apparatus 102 can update information regarding PCI, so as to hold PCI at the timepoint when time synchronization is established and a data signal is transmitted. In addition, even in a case where the terminal apparatus 102 established time synchronization and transmitted a data signal due to a cause other than a change in PCI, the terminal apparatus 102 can update the value of PCI to the value of PCI of the serving cell at the time of transmission of the data signal.

As described above, as a result of setting, for the terminal apparatus 102, a condition under which time synchronization is to be established and a data signal is to be transmitted, the base station apparatus 101 can flexibly perform setting on whether or not to establish time synchronization in accordance with the situation of the terminal apparatus 102. Note that, for example, only a terminal apparatus 102 for which the allowable delay amount is small may be notified of a condition by the base station apparatus 101, and, regarding a terminal apparatus 102 to which this condition is not to be notified, the base station apparatus 101 can perform settings so as to establish time synchronization and transmit a data signal, irrespective of the condition. Accordingly, regarding at least some of the terminal apparatuses 102, for example, a terminal apparatus 102 for which a delay is not strictly requested, and the like, it is possible to reduce the processing load of the base station apparatus 101 as a result of establishing time synchronization irrespective of a condition.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2018-175781 filed September 20, 2018, which is hereby incorporated by reference herein.

## Claims

1. A terminal apparatus that is operable in a plurality of states that include a first state where connection with a base station apparatus is established and a second state where connection with the base station apparatus is not established but the base station apparatus holds information regarding the terminal apparatus, wherein the terminal apparatus performs:
receiving, from the base station apparatus, information regarding whether or not to establish time synchronization when a signal is to be transmitted to the base station apparatus in the second state,
determining, based on the information, whether or not to establish time synchronization when a signal is to be transmitted to the base station apparatus in the second state, and
transmitting a signal to the base station apparatus in the second state, with executing processing for establishing time synchronization with the base station apparatus if it is determined that time synchronization is to be established, and without executing the processing if it is determined that time synchronization is not to be established.

2. The terminal apparatus according to claim 1,
wherein the information is instruction information instructing whether or not to establish time synchronization when a signal is to be transmitted to the base station apparatus in the second state.

3. The terminal apparatus according to claim 1,
wherein the information is condition information indicating a condition that is used when the terminal apparatus determines whether or not to establish time synchronization when a signal is to be transmitted to the base station apparatus in the second state.

4. The terminal apparatus according to claim 3,
wherein the condition includes at least one of a condition related to a change amount of received power of a predetermined signal from the base station apparatus and a condition related to a time from when time synchronization with the base station apparatus was established and a signal was then transmitted to the base station apparatus.

5. The terminal apparatus according to any one of claims 1 to 4,
wherein the information is notified when the terminal apparatus holds predetermined information that enables communication with the base station apparatus in the second state.

6. The terminal apparatus according to claim 5,
wherein the information is included in a message for setting the predetermined information that is transmitted from the base station apparatus.

7. The terminal apparatus according to any one of claims 1 to 6,
wherein the information is included in a message that is transmitted by the base station apparatus in order to change the terminal apparatus to the second state.

8. A base station apparatus that transmits, to a terminal apparatus that is operable in a plurality of states that include a first state where connection with the base station apparatus is established and a second state where connection with the base station apparatus is not established but the base station apparatus holds information regarding the terminal apparatus, information regarding whether or not to establish time synchronization when a signal is to be transmitted to the base station apparatus in the second state.

9. The base station apparatus according to claim 8.
wherein the information is instruction information indicating whether or not to establish time synchronization when a signal is to be transmitted to the base station apparatus in the second state.

10. The base station apparatus according to claim 8,
wherein the information is condition information indicating a condition that is used when the terminal apparatus determines whether or not to establish time synchronization when a signal is to be transmitted to the base station apparatus in the second state.

11. The base station apparatus according to any one of claims 8 to 10,
wherein the information is transmitted when the terminal apparatus holds predetermined information that enables communication with the base station apparatus in the second state.

12. A communication method that is executed by a terminal apparatus that is operable in a plurality of states that include a first state where connection with a base station apparatus is established and a second state where connection with the base station apparatus is not established but the base station apparatus holds information regarding the terminal apparatus, the method comprising:
receiving, from the base station apparatus, information regarding whether or not to establish time synchronization when a signal is to be transmitted to the base station apparatus in the second state;
making a determination, based on the information, as to whether or not to establish time synchronization when a signal is to be transmitted to the base station apparatus in the second state; and
transmitting a signal to the base station apparatus in the second state, with executing processing for establishing time synchronization with the base station apparatus if it is determined that time synchronization is to be established, and without executing the processing if it is determined that time synchronization is not to be established.

13. A communication method that is executed by a base station apparatus, comprising:
transmitting, to a terminal apparatus that is operable in a plurality of states that include a first state where connection with the base station apparatus is established and a second state where connection with the base station apparatus is not established but the base station apparatus holds information regarding the terminal apparatus, information regarding whether or not to establish time synchronization when a signal is to be transmitted to the base station apparatus in the second state.

14. A program for causing a computer provided in a terminal apparatus that is operable in a plurality of states that includes a first state where connection with a base station apparatus is established and a second state where connection with the base station apparatus is not established but the base station apparatus holds information regarding the terminal apparatus to:
receive information regarding whether or not to establish time synchronization when a signal is to be transmitted to the base station apparatus in the second state, from the base station apparatus,
make a determination, based on the information, as to whether or not to establish time synchronization when a signal is to be transmitted to the base station apparatus in the second state, and
transmit a signal to the base station apparatus in the second state, with executing processing for establishing time synchronization with the base station apparatus if it is determined that time synchronization is to be established, and without executing the processing if it is determined that time synchronization is not to be established.

15. A program for causing a computer provided in a base station apparatus to transmit, to a terminal apparatus that is operable in a plurality of states that include a first state where connection with the base station apparatus is established and a second state where connection with the base station apparatus is not established but the base station apparatus holds information regarding the terminal apparatus, information regarding whether or not to establish time synchronization when a signal is to be transmitted to the base station apparatus in the second state.
